(19) Europäisches Patentamt
European Patent Office
Office européen des brevets

(11) **EP 1 014 036 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**21.04.2010 Patentblatt 2010/16**

(45) Hinweis auf die Patenterteilung:
**07.01.2004 Patentblatt 2004/02**

(21) Anmeldenummer: **99125794.0**

(22) Anmeldetag: **23.12.1999**

(51) Int Cl.:
***G01B 11/16*** *(2006.01)* ***G01M 17/02*** *(2006.01)*

(54) **Vorrichtung und Verfahren zur Objektuntersuchung**

Device and procedure to examine an object

Dispositif et procédé pour examiner un objet

(84) Benannte Vertragsstaaten:
**AT DE FR GB IT**

(30) Priorität: **23.12.1998 DE 19859725**

(43) Veröffentlichungstag der Anmeldung:
**28.06.2000 Patentblatt 2000/26**

(73) Patentinhaber:
• **Dengler, Stefan**
**75365 Calw-Stammheim (DE)**
• **Mähner, Bernward**
**82205 Gilching (DE)**

(72) Erfinder:
• **Dengler, Stefan**
**75365 Calw-Stammheim (DE)**
• **Mähner, Bernward**
**82205 Gilching (DE)**

(74) Vertreter: **Schober, Christoph D.**
**Flügel Preissner Kastel Schober**
**Patentanwälte**
**Postfach 31 02 03**
**80102 München (DE)**

(56) Entgegenhaltungen:
**DE-A- 3 209 435    DE-A- 4 231 578**
**DE-A- 19 625 830    DE-C- 4 231 578**
**FR-A- 2 502 341**

• **STEINCHEN, WOLFGANG ET AL: ' Application of Laser Diodes in Digital Speckle Pattern Shearing Interferometry', Bd. 3415, Juli 1998, QUEBEC, CANADA Artikel ' SPIE Conference on Laser Diodes and Applications III'**
• **BISLE, W.J.: 'Optische Prüfung an Luftfahrtkomponenten: Weiterentwicklung des Scherografie-Prüfverfahrens für Nicht-Kooperative Oberflächen von Flugzeugstrukturen' DGLR JAHRESTAGUNG, DEUTSCHER LUFT- UND RAUMFAHRTKONGRESS 1998 05 Oktober 1998 - 08 Oktober 1998, BREMEN,**
• **YANG, LIANGXIANG: 'Fortschrittsberichte VDI Reihe 8', Bd. 682, 1998, VDI VERLAG, DÜSSELDORF Artikel 'Grundlagen und Anwendungen der Phasenschiebe-Shearografie zur zerstörungsfreien Werkstoffprüfung, Dehnungsmessung und Schwingungsanalyse'**

Bemerkungen:
Die Akte enthält technische Angaben, die nach dem Eingang der Anmeldung eingereicht wurden und die nicht in dieser Patentschrift enthalten sind.

EP 1 014 036 B2

**Beschreibung**

Die Erfindung betrifft eine Vorrichtung und ein Verfahren zum Untersuchen von Objekten. Insbesondere betrifft die Erfindung eine Vorrichtung und ein Verfahren zur Untersuchung von an Objekten mit diffus streuender Oberfläche auftretenden Verformungen.

Nicht zerstörende Objektprüfungen sind insbesondere dort praktisch interessant, wo Qualitätsprüfungen an Werkstücken oder anderweitigen Arbeitsobjekten vorzunehmen sind. Beispielsweise stellt sich in der Praxis die Aufgabe, Reifen auf Fehlstellen zu untersuchen.

Dazu ist es aus der DE 42 31 578 C2 bekannt, die Oberfläche eines Prüflings mit Laserdioden zu beleuchten. Die Beobachtung des Prüflings erfolgt mittels eines Interferometers, das an einem Bildsensorsystem ein Interferenzbild erzeugt. Ein Spiegel des Interferometers ist beweglich angeordnet. Die erzeugten Interferenzbilder sind $2\pi$-moduliert; dies bedeutet, dass Phasendrehungen, die den Wert $2\pi$ überschreiten, von einer entsprechenden, um $2\pi$ verminderten Phasendrehung nicht ohne weiteres unterscheidbar sind. Dadurch kann ein Punkt- oder Linienmuster erzeugt werden, das die Verformung der Oberfläche kennzeichnet.

Zur Beleuchtung der Objektoberfläche werden mehrere Laserdioden eingesetzt, die jeweils einen Leuchtfleck erzeugen. Die Leuchtflecke grenzen aneinander und überlappen sich allenfalls in Randzonen. Die beleuchteten Teilflächen setzen die Gesamtfläche zusammen. Die Abbildungsqualität der Einrichtung ist eingeschränkt.

Aus der DE-A-196 25 830 ist ein Verfahren sowie eine Vorrichtung für die Shearing-Speckle-Interferometrie bekannt, mit dem sich sowohl out-of-plane Verformungen einer Oberfläche als auch in-plane Verformungen einer Oberfläche messen lassen. Dazu weist die Messvorrichtung mehrere Laserquellen auf, die das betreffende Objekt aus unterschiedlichen Raumrichtungen beleuchten. Die Beleuchtung erfolgt abwechselnd. Dazu dienen in den jeweiligen Lichtwegen der beiden Laserlichtquellen angeordnete Verschlüsse, die abwechselnd geöffnet und geschlossen werden. Aus den beiden unterschiedlichen Beleuchtungen werden letztendlich zwei unterschiedliche Interferometrogramme errechnet, nämlich eines für die in-plane Verformung und ein anderes für die out-of-plane Verformungen.

Davon ausgehend ist es Aufgabe der Erfindung, eine Vorrichtung und ein Verfahren zum Beobachten von Objektoberflächen zu schaffen, die bzw. das eine verbesserte Bildqualität aufweist.

Diese Aufgabe wird mit der Vorrichtung nach Anspruch 1 und dem Verfahren nach Anspruch 16 gelöst.

Die erfindungsgemäße Vorrichtung weist einen Messkopf auf, der anhand des von der Objektoberfläche rückgestreuten Lichts ein Interferenzbild erzeugt. Ein elektronischer Bildsensor, der in den Messkopf integriert sein kann, erfasst das Interferenzbild und wandelt es in entsprechende elektrische Signale um, die dann weiter auswertbar sind.

Das von dem Messkopf erfasste Bildfeld wird von einer Beleuchtungseinheit beleuchtet, die mehrere Laserdioden aufweist. Diese sind so angeordnet, dass sie einen gemeinsamen Leuchtfleck bilden. Dieser ist gleichmäßig, ausgeleuchtet, so dass innerhalb des Leuchtflecks nur geringe Helligkeitsunterschiede anzutreffen sind. Dies wird durch eine relativ große Überlappung der aus den einzelnen Laserdioden austretenden Lichtbündel erreicht. Der gemeinsame Leuchtfleck ist nicht in Einzelleuchtflecke unterteilt.

Durch die gleichmäßige Ausleuchtung der zu untersuchenden Objektoberfläche wird trotz fehlender Kohärenz der einzelnen die Oberfläche treffenden Lichtanteile eine erhöhte Bildqualität erreicht. In dem erzeugten Interferenzbild sind sowohl in Bildmitte als auch an den Bildrändern die gewünschten Verformungen gut zu erkennen.

Die Lichtbündel der.Laserdioden können so stark überlappen, dass mehr als die Hälfte der Fläche des Leuchtflecks Licht von zwei Laserdioden erhält. Es ist wenigstens ein Bereich vorhanden der von dem Licht von mehr als zwei Laserdioden getroffen wird. Die Ausrichtung wird zweckmäßigerweise in den meisten Fällen auf gleichmäßige Helligkeitsverteilung ausgerichtet. Dabei ist es auch möglich, nahezu die gesamte Fläche des Leuchtflecks von mehr als zwei Dioden und auch von unterschiedlich vielen Dioden beleuchten zu lassen.

Es ist möglich, die Laserdioden der gesamten Gruppe gleichzeitig, vorzugsweise im Dauerbetrieb, leuchten zu lassen. Bei einer abgewandelten Ausführungsform können die Laserdioden pulsierend betrieben werden. Dadurch ist eine höhere Lichtausbeute für den Moment der Bildaufnahme möglich, wodurch entweder das beobachtete Objektfeld vergrößert oder die Beleuchtungsleistung verkleinert oder die Belichtungszeit verkürzt werden kann.

Alternativ ist es möglich, die Laserdioden derart anzusteuern oder beispielsweise mit einer Shuttervorrichtung derart anzuordnen, dass das Licht der Laserdioden der Gruppe zeitlich versetzt auf die Objektoberfläche trifft. Die entstehenden Einzelinterferogramme können an dem Bildsensor überlagert und summiert (integriert) oder, je nach Hardware, einzeln aufgenommen und in einem Rechner miteinander kombiniert werden. Wie bei Dauerbeleuchtung ergibt sich insgesamt ein gleichmäßig ausgeleuchtetes Feld. Die Laserdioden können ruhend oder bewegt angeordnet sein.

Der Bildsensor ist vorzugsweise an eine Bildauswerteeinrichtung angeschlossen, die anhand mehrerer aufgenommener Interferenzbilder eine verformung der Objektoberfläche bestimmt. Dies ist insbesondere in Fällen zweckmäßig, bei denen die Struktur oder Form der unverformten Objektoberfläche ohne Interesse ist. Solche Messungen sind beispielsweise bei der Werkstück- oder Materialprüfung zweckmäßig. Z.B. können sie dazu eingesetzt werden, Fehlstellen an Reifen zu erkennen. Die zu untersuchende Reifenoberfläche wird dabei bei zwei voneinander verschiedenen Umgebungsdrücken aufgenommen. Entstehende Verformungen werden sichtbar gemacht.

Das Interferometer kann ohne direkten Interferenzstrahl arbeiten. Dies ist möglich, wenn der von dem Objekt rückgestreute Strahl in zwei Teilstrahlen aufgeteilt wird, von denen einer einer Phasenverschiebung unterworfen wird. Die Phasenverschiebung ist vorzugsweise steuer- oder kontrollierbar. Dazu dient vorteilhafterweise eine Einrichtung zur Phasenverschiebung, beispielsweise ein Spiegel, der von einem Piezo-Aktuator verstellt wird. Es ist möglich, als Interferometer ein Michelson-Interferometer zu verwenden. Eine besonders vorteilhaft Ausführungsform nutzt jedoch als Interferometer eine Anordnung, bei der der Objektlichtstrahl in zwei Teilstrahlen aufgeteilt wird, die auf unterschiedlichen Wegen zu dem Bildsensor gelangen und sich erst dort wieder treffen. Dies hat den Vorteil, dass Lichtverluste, wie sie beim Michelson-Interferometer beim Zusammenführen der Teilstrahlen im Strahlteiler auftreten, vermieden werden.

Der Bildsensor ist an eine Bildauswerteeinrichtung angeschlossen, die vorzugsweise eine Recheneinheit aufweist. Die Recheneinheit, beispielsweise ein entsprechend leistungsfähiger Computer, arbeitet ein Programm ab, das die Bildverarbeitung bewerkstelligt. Dabei wird beispielsweise aus mehreren, von dem ruhenden Objekt mit gegeneinander verschobener Phasenlage aufgenommenen Bildern ein Phasenbild berechnet. Die Phasenlagen einzelner Bildpunkte sind in der Regel stochastisch verteilt und geben keinen direkten Aufschluss über das Objekt. Wird die Objektoberfläche jedoch verformt oder um einen geringen Betrag auf den Messkopf hin oder von diesem weg verschoben und wird in diesem Zustand beispielsweise durch Verknüpfung mehrerer, durch Phasenverschiebung veränderter Interferenzen untereinander ein Phasenbild erhalten, kann aus beiden erhaltenen Phasenbildern ein Phasendifferenzbild bestimmt werden. Das Phasendifferenzbild gibt Aufschluss über lokale Verschiebungen oder Verformungen und kann zur Anzeige gebracht werden. Dazu wird dem jeweiligen Phasendifferenzwinkel des Bildpunkts ein Grauwert zugeordnet, der auf einer Wiedergabeeinrichtung an der betreffenden Stelle angezeigt wird. Beispielsweise wird einem Phasendifferenzwinkel von Null der Anzeigewert schwarz und dem Phasendifferenzwinkel von $2\pi$ der Grauwert weiß zugeordnet.

Bei einer vorteilhaften Ausgestaltung des Verfahrens und der zugehörigen Vorrichtung werden die Phasendifferenzwinkel, bevor sie zur Anzeige gebracht werden, $2\pi/n$-moduliert. Dazu werden die Differenzwinkel des Phasendifferenzbildes punktweise einer Modulo $2\pi/n$-Division unterworfen. Dies bedeutet, dass der Phasendifferenzwinkel durch $2\pi/n$ dividiert wird und der verbleibende Rest den Ergebniswert bildet. Dieser Ergebniswert wird mit dem Faktor n multipliziert und ergibt den $2\pi/n$-modulierten Wert, der im Wertbereich von Null bis $2\pi/n$ mit Grauwerten zwischen schwarz und weiß zur Anzeige gebracht wird. Bedarfsweise kann auch eine farbige Anzeige gewählt werden. Der Faktor n ist dabei vorzugsweise eine ganze Zahl größer 1. Dies ergibt eine Verstärkung der in dem Phasendifferenzbild vorhandenen und sichtbaren Objektverformungen und somit eine deutlichere Erkennbarkeit von Fehlstellen an dem Objekt.

Es ist alternativ möglich, die Phasendifferenz oder die $2\pi/n$-modulierten Werte der Phasendifferenzen mit einer Sinusfunktion zu modulieren und den erhaltenen Wert zur Anzeige zu bringen. Es ergibt sich dann ein Streifenmuster, das die Objektverformung kennzeichnet. Je höher n gewählt wird, desto höher ist die Auflösung, d.h. desto mehr Streifen entfallen auf eine bestimmte Objektverformung. Hierbei ist es zweckmäßig, wenn der Bediener den Faktor n durch geeignete Eingabemittel wählen kann. Der Faktor kann beispielsweise auch nach einer Bildaufnahme umgeschaltet werden, um ein und denselben Testlauf, d.h. die gleiche Objektverformung mit unterschiedlichen Modulationen darstellen zu können.

Das Verfahren ist für Prüfobjekte mit diffus streuender Oberfläche geeignet und ergibt eine bildhafte Darstellung von Phasendifferenzwinkeln. Dies gestattet dem Bediener ein leichtes Erkennen von Strukturfehlern im vermessenen Objekt. Dabei ist dieses Verfahren für beliebige Prüfobjekte bzw. Fehlergrößen anwendbar und erfordert einen geringen Rechenaufwand, so dass die Ergebnisdarstellung quasi in Echtzeit gewährleistet ist.

Bei einer weiteren vorteilhaften Ausgestaltung der Erfindung wird der anzuzeigende Wert so skaliert, dass der darstellbare Grauwertbereich des Bildverarbeitungssystems vollständig ausgenutzt wird. Zur Verbesserung der Sichtbarkeit von Fehlstellen kann der einem Winkel der Größe Null entsprechende Grauwert oder Farbwert vom Benutzer interaktiv eingestellt werden.

Das $2\pi/n$-modulierte Phasendifferenzbild kann auch unmittelbar aus den phasenverschobenen Intensitätsbildern einer ersten Aufnahmeserie bei einem ersten Objektzustand und einer zweiten Serie phasenverschobener Aufnahmen (Intensitätsbildern) bei einem zweiten Objektzustand gewonnen werden. Die Gleichungen zur $2\pi/n$-Modulation werden dazu in die Gleichungen zur Erzeugung der Phasendifferenzbilder aus den Intensitätsbildern eingesetzt.

Bei einer vorteilhaften Ausführungsform werden alle Punkte des Leuchtflecks, die von der Kamera oder einer anderen Bilderfassungseinrichtung erfasst werden, von wenigstens zwei Laserdioden beleuchtet. Dadurch können auch dann ordentliche Messergebnisse erhalten werden, wenn eine Laserdiode ausgefallen ist. Das Licht ist somit in dem gesamten von der Kamera erfassten Bereich inkohärent.

Weitere Einzelheiten vorteilhafter Ausführungsformen der Erfindung sind Gegenstand von Unteransprüchen, der Zeichnung oder der Beschreibung.

In der Zeichnung sind Ausführungsbeispiele des Gegenstandes der Erfindung veranschaulicht. Es zeigen:

Fig. 1 eine erfindungsgemäße Vorrichtung zur Ermittlung von Verformungen an einer Objektoberfläche, in schematisierter Darstellung,

Fig. 2 eine Beleuchtungseinheit und eine von dieser beleuchtete Objektoberfläche zur interferometrischen Auswertung von Oberflächenverformungen, in schematisierter Prinzipdarstellung,

Fig. 3 eine Objektoberfläche mit einem auf sie fallenden Leuchtfleck einer Beleuchtungseinheit nach Fig. 2,

Fig. 4 einen Messkopf der Vorrichtung nach Fig. 1, in schematisierter gesonderter Darstellung,

Fig. 5 Grauwerte G in Abhängigkeit von Phasendifferenzwinkeln $\Delta\pi$ bei unterschiedlichen Modulationen,

Fig. 6 ein $2\pi/n$-moduliertes Bild einer Objektoberfläche,

Fig. 7 ein $\pi$-moduliertes Fehlstellenbild der gleichen Objektoberfläche,

Fig. 8 ein sinustransformiertes moduliertes Phasendifferenzbild, gebildet aus dem Fehlstellenbild nach Fig. 3 und

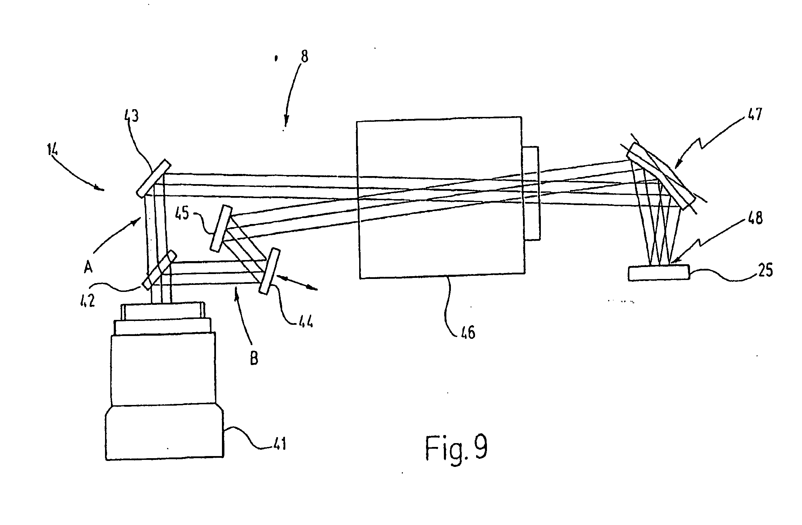

Fig. 9 eine weitere Ausführungsform des Interferometers in schematischer Darstellung:

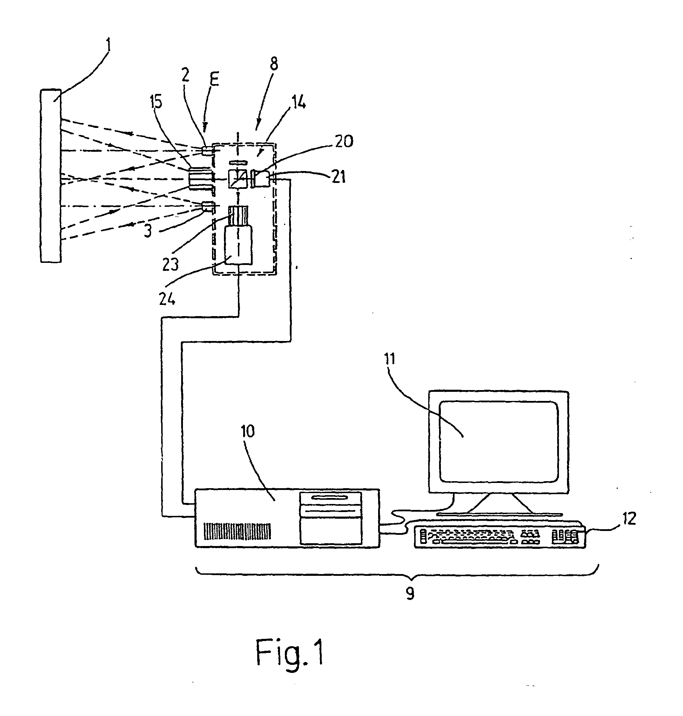

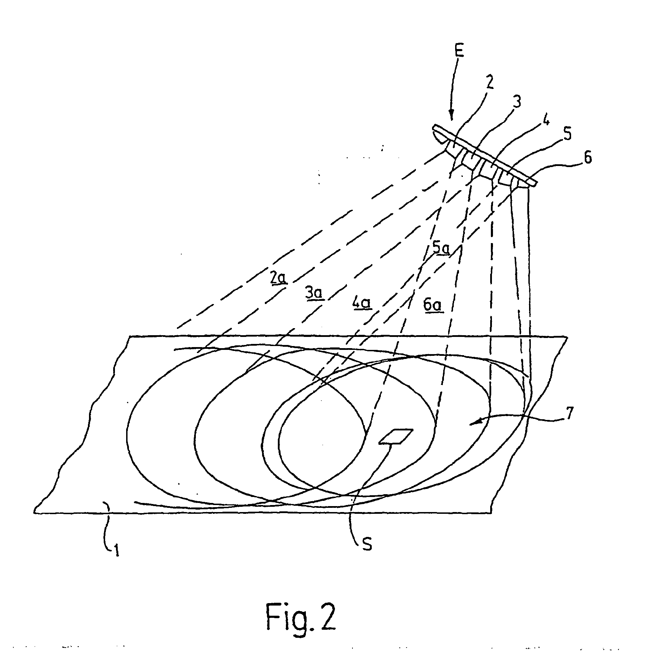

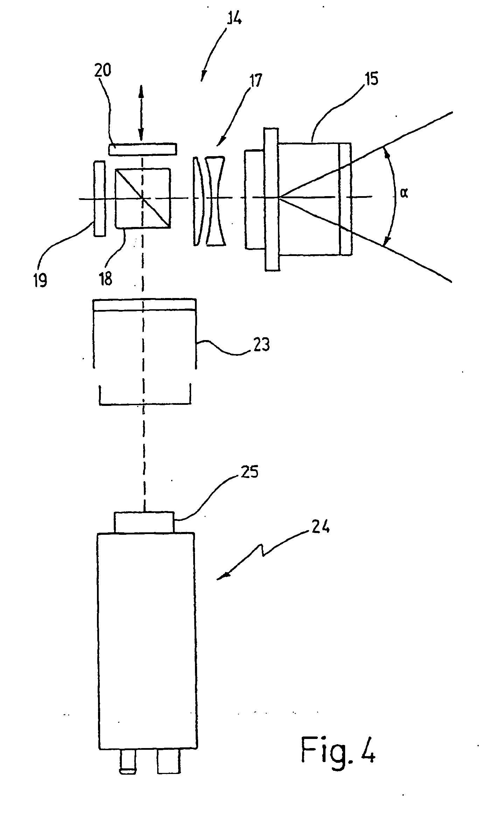

In Fig. 1 ist ein Mess-System zur Verformungsmessung an einem Prüfobjekt 1 mittels Shearing-Interferometrie dargestellt. Zur Beleuchtung des Prüfobjekts 1, das beispielsweise ein Reifen, anderweitige Gummiteile oder ein sonstiger Gegenstand sein kann, dient eine Beleuchtungseinheit E, die mehrere Laserdioden 2, 3 aufweist. In Fig. 2 ist dabei die Beleuchtung der Oberfläche des Prüfobjekts 1 näher veranschaulicht. Die schematisch dargestellte Beleuchtungseinheit E weist außer den Laserdioden 2, 3 weitere Laserdioden 4, 5, 6 auf, die jeweils für sich einen Lichtkegel 2a, 3a, 4a, 5a, 6a erzeugen. Die Lichtkegel 2a, ..., 6a fließen ineinander, so dass sie sich an der Objektoberfläche 1 mehrfach überlappen. Es entsteht insgesamt ein Leuchtfleck 7, der weitgehend gleichmäßig ausgeleuchtet ist. Eine willkürlich herausgegriffene Stelle S wird von mehreren Lichtkegeln 4a, 5a, 6a beleuchtet, die gleiche oder auch unterschiedliche Öffnungswinkel aufweisen können. Das Licht der betreffenden Laserdiode 4, 5, 6 hat im Wesentlichen die gleiche Wellenlänge, ist jedoch zueinander nicht kohärent. Gleiches gilt für das rückgestreute Licht.
Zur Beobachtung der Oberfläche des Prüfobjekts 1 dient ein Messkopf 8, der an einer Bildauswerteeinheit 9 angeschlossen ist. Zu dieser gehören ein Computer 10 und ein Monitor 11 sowie eine Eingabeeinrichtung, beispielsweise eine Tastatur 12.
Der Messkopf 8 enthält ein Interferometer 14, das über ein Objektiv 15 von der Objektoberfläche rückgestreute Lichtstrahlung erhält.

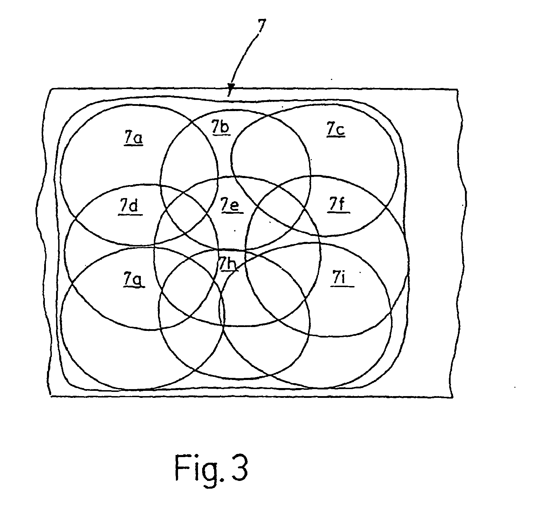

In Fig. 3 ist nochmals ein Leuchtfleck 7 veranschaulicht, der aus mehreren, sich gegenseitig stark überlappenden Teilleuchtflecken 7a, 7b, 7c, 7d, 7f, 7g, 7h, 7i gebildet ist. Teile des Leuchtflecks 7 sind durch von bis zu vier unterschiedlichen Laserdioden beleuchtet. Die Strahlauffächerung kann auch größer gewählt werden, so dass jede Laserdiode nahezu den gleichen Leuchtfleck 7 ausleuchtet. Die Ausleuchtung kann dabei aus unterschiedlichen Raumwinkeln heraus vorgenommen werden, so dass sich eine gleichmäßige Verteilung gestreuten Lichts im Raum und eine gleichmäßige Fleckausleuchtung ergibt.
Das in Fig. 4 veranschaulichte Interferometer 14 ist als Michelson-Interferometer ausgebildet. Das Objektiv 15 weist einen Öffnungswinkel $\alpha$ auf, mit dem die Objektoberfläche aufgenommen wird. Dabei ist die Anordnung vorzugsweise so getroffen, dass der Leuchtfleck 7 das Gesichtsfeld des Objektivs 15 relativ genau ausfüllt. Bedarfsweise können jedoch auch Abweichungen vorhanden sein. Das Objektiv 15 enthält vorzugsweise eine Blende und ein nachgeordnetes Linsensystem 17, um aus dem von der Objektoberfläche rückgestreuten Licht ein Lichtbündel auszubilden. Dieses wird einem Strahlteiler 18 zugeleitet, der im Strahlengang des Linsensystems 17 angeordnet ist. Der Strahlteiler 18 teilt den ankommenden Lichtstrahl in zwei Teilstrahlen auf, die nahezu rechtwinklig auf Spiegel 19, 20 treffen. Diese sind so angeordnet, dass sie den jeweiligen Teillichtstrahl im Wesentlichen in sich selbst zurückreflektieren, wobei eine gewisse Verkippung zulässig oder zur Erzeugung von Shearing-Abbildungen erforderlich ist.
Der Spiegel 19 ist ortsfest gelagert, während der Spiegel 20 durch eine, beispielsweise aus Fig. 1 ersichtliche Piezoantriebseinrichtung in und gegen Strahlrichtung verstellbar ist. Der Piezoaktuator ist dabei von dem Computer 10 gesteuert und dazu eingerichtet, den Spiegel, bezogen auf die Lichtwellenlänge, beispielsweise in $\lambda/4$-Schritten zu verstellen.
Der Strahlteiler 18 führt die von den Spiegeln 19, 20 reflektierten Teilstrahlen wieder zusammen und über ein Abbildungsobjektiv 23 einer Kamera 24 zu. Die Kamera 24 enthält als Bildsensor eine CCD-Matrix 25 und die entsprechenden Elektronikbausteine zur Ansteuerung derselben. Die Kamera 24 ist mit dem Computer 10 verbunden.
Das insoweit beschriebene Mess-System arbeitet wie folgt:
Zur Bestimmung von Objektfehlstellen wird das Objekt 1 vor dem Messkopf 8 platziert und mit den Laserdioden 2, 3, 4, 5, 6 beleuchtet. Die Laserdioden 2, 3, 4, 5, 6 können dabei im Dauerbetrieb betrieben werden, d.h. gleichzeitig dauernd leuchten. Auf dem Objekt 1 wird dadurch der Leuchtfleck 7 erzeugt, der auf den auf Fehlstellen zu untersuchenden Bereich fällt. Ohne dass das Objekt 1 in irgendeiner Weise merklich bewegt würde, werden nun mehrere Bilder von der Objektoberfläche aufgenommen. Dazu wird bei gegebener Positionierung der Spiegel 19, 20 zunächst ein erstes Bild aufgenommen und abgespeichert. Das von dem Bildsensor 25 erfasste Bild ist ein Interferenzmuster der Objektoberfläche, das stochastisch verteilte helle, dunkle und graue Bereiche, sogenannte "Speckles" enthält. Ist das Bild aufgenommen, steuert der Rechner den Spiegel 20 so an, dass er um einen bekannten Betrag verschoben wird. Es ergibt sich eine definierte Phasenverschiebung zwischen den beiden Teilstrahlen der Spiegel 19 und 20. Das Speckle-Bild ändert sich dabei, indem die einzelnen Speckles geänderte Helligkeit annehmen. Die Speckle bleiben selbst jedoch am gleichen Ort.

Ist das Bild aufgenommen, wird eine weitere Verstellung des Spiegels 20 aufgenommen, um ein drittes Bild aufzunehmen. Ist das dritte Bild aufgenommen, wird nach einer nochmaligen Verstellung des Spiegels 20 um einen bekannten Phasenbetrag ein viertes Bild aufgenommen. Aus den vier unterschiedlichen Speckle-Bildern berechnet der Computer 10 die für jeden Speckle oder jeden Pixel gültigen Phasenwinkel.

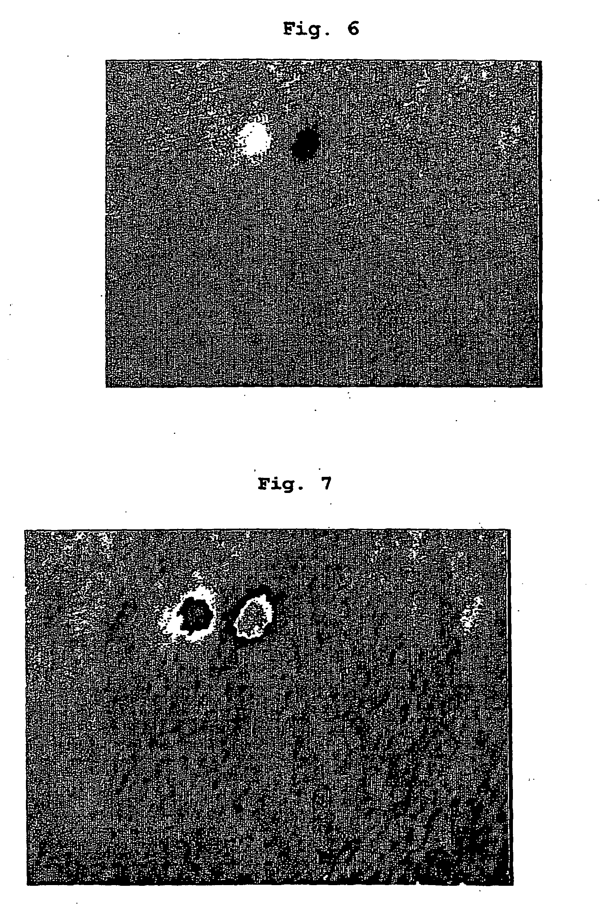

Ist auf diese Weise das erste Phasendifferenzbild erzeugt, wird das zu prüfende Objekt 1 beispielsweise mit einer Prüfkraft beaufschlagt. Dies kann im Falle von Reifen dadurch geschehen, dass der Umgebungsdruck geändert wird. Es ergeben sich dadurch an der Oberfläche des Objekts 1 charakteristische Verformungen, die insbesondere an Fehlstellen größer sind als die Verformung der Umgebung. Ist das Objekt 1 verformt, werden wiederum mehrere, durch Verstellung des Spiegels 20 phasenverschobene Speckle-Bilder aufgenommen, aus denen dann die geänderten Phasenwinkel pixelweise berechnet werden. Es ergibt sich ein zweites Phasenwinkelbild. Zur Bestimmung der Oberflächenverformung wird aus beiden erhaltenen Phasenbildern nun ein Phasendifferenzbild erzeugt. Dies erfolgt bildpunkt- oder pixelweise. Es wird die Phasenwinkeldifferenz zwischen verformtem und unverformtem Zustand für jeden Bildpunkt bestimmt. Ist auf diese Weise das Phasendifferenzbild erhalten, kann es auf dem Monitor 11 zur Anzeige gebracht werden. Ein nach diesem Verfahren erzeugtes Fehlstellenbild ist in Fig. 6 wiedergegeben. Während eine schwarz erscheinende Fehlstelle noch relativ gut sichtbar ist, scheint die links daneben vorhandene Fehlstelle relativ schwach auf.

Eine Betonung der Fehlstellen wird erhalten, wenn der Computer 10 die Phasendifferenzbilder nachbearbeitet. In der Nachbearbeitung wird dem Phasendifferenzbildern $\Delta\varphi(x, y)$ ein $2\pi/n$ moduliertes Phasendifferenzbild erzeugt. Dazu wird für jeden Bildpunkt folgende Gleichung abgearbeitet:

$$\varphi_{diff}(x,y) = n \cdot (\Delta\varphi(x,y)) \; MOD \; (2\pi/n)) \cdot s$$

oder:

$$\varphi_{diff}(x,y) = n \cdot ((\varphi_2(x,y) - \varphi_1(x,y)) \; MOD \; (2\pi)/n)) \cdot s$$

mit

$\Delta\varphi\;x,y)$ :   Phasendifferenzwinkel am Punkt (x,y)

$\varphi_1(x,y)$ :   Phasendifferenzwinkel am Punkt (x,y) im Zustand 1

$\varphi_2(x,y)$ :   Phasendifferenzwinkel am Punkt (x,y) im Zustand 2

$\varphi_{diff}(x,y)$ :   Phasendifferenzwinkel mit $2\pi/n$-Modulation am Punkt (x,y)

n :   ganze Zahl größer gleich 1

S :   Umrechnungsfaktor von Phasendifferenzwinkel in Grauwert

MOD :   Modulo-Operator.

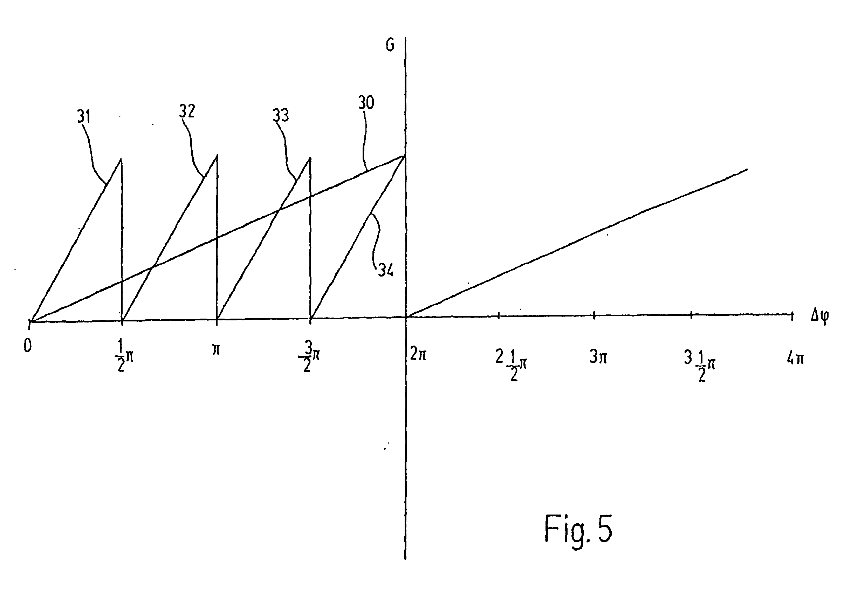

Diese Operation ist in Fig. 5 veranschaulicht. Das Diagramm veranschaulicht die Zuordnung eines Grauwerts G zu einem Phasendifferenzwinkel $\Delta\varphi$ an einen ausgewählten Punkt x,y. Ohne Nachbearbeitung werden Phasendifferenzwinkelwerte zwischen Null und $2\pi$ Grauwerten entsprechend einer Geraden 30 zugeordnet. Bei einer Nachbearbeitung mit beispielsweise n = 4 werden die Phasendifferenzwinkel $\Delta\varphi$ auf die entsprechend steileren Geraden 31, 32, 33, 34 abgebildet. Dies erfolgt, indem die vorhandenen Differenzwinkel $\Delta\varphi$ jeweils in den von der Geraden 31 eingenommenen Bereich projiziert werden. Dazu wird der vorhandene Phasendifferenzwinkel $\Delta\varphi$, beispielsweise $3\pi/4$ durch $2\pi/4$ geteilt. Der verbleibende Divisionswert beträgt $\pi/4$ und stellt das Ergebnis der Modulo $2\pi/4$-Division dar. Der Divisionsrest wird nun mit n multipliziert, wobei n der Faktor ist, der den gegenüber der Geraden 30 vergrößerten Anstieg der Geraden 31 kennzeichnet. Bei dieser Darstellung wird dem Differenzwinkel $\pi/4$ der gleiche Grauwert zugeordnet wie den Differenzwinkeln $3\pi/4$, 1 1/4 $\pi$ und 1 3/4 $\pi$. Das entstehende Monitorbild ist in Fig. 7 veranschaulicht. Die beiden Fehlstellen sind als heller bzw. dunkler Fleck deutlich hervorgehoben zu erkennen. Dies ermöglicht eine sichere und präzise Darstellung von Fehlstellen und vermeidet die Gefahr, dass bei der Inspektion des Objekts strukturelle Fehler wegen verwaschener Darstellung übersehen werden.

Außerdem ist es möglich, die erhaltenen Phasendifferenzwinkel $\Delta\varphi$ oder die $2\pi/n$-modulierten Differenzwinkel $\Delta\varphi$ als Argument in eine Sinusfunktion einzusetzen, um eine Sinustransformation durchzuführen. Dies muss wiederum punktweise geschehen. Die Transformation lautet:

$$\varphi(x,y) \rightarrow \sin(\varphi(x,y)).$$

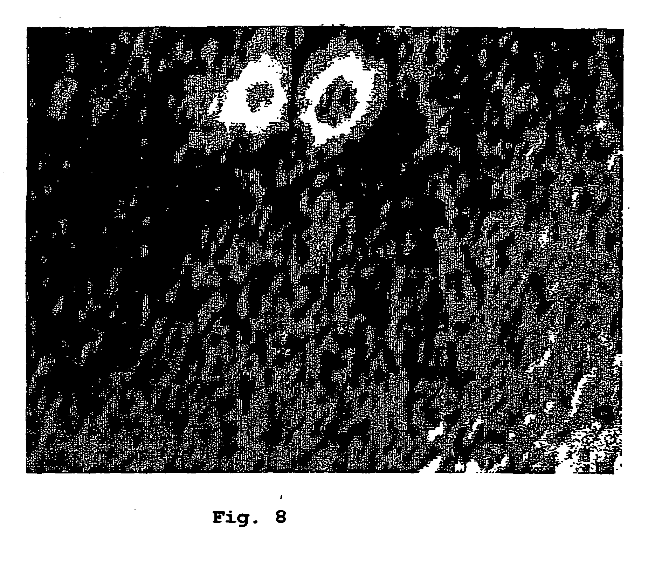

Die Amplitude der Interferenzlinien ist normiert, d.h. die Amplitude der Sinusmodulation ist im Bild unabhängig vom Ort überall konstant. Es ergibt sich ein gut lesbares Bild, insbesondere Fehlstellenbild (Fig. 8). Die Anzahl der Interferenzlinien wird mit größer werdendem n ebenfalls größer.

Die Bildverarbeitungseinrichtung 9, d.h. das auf dem Computer 10 laufende Programm kann so beschaffen sein, dass die Wahl der Modulation beispielsweise durch Eingabe des Faktors n möglich ist. Außerdem kann das Programm so beschaffen sein, dass zwischen Wiedergabe der Phasendifferenzwinkel (mit und ohne Modulation) und der Wiedergabe eines sinustransformierten Bilds umgeschaltet werden kann.

In Fig. 1 ist ein Mess-Kopf 8 mit Michelson-Interferometer zugrundegelegt. Abweichend davon kann ein Messkopf 8 mit einem Interferometer 14 zur Anwendung kommen, bei dem ein Lichtstrahl in Teilstrahlen A, B aufgeteilt wird, die erst an der CCD-Matrix 25 zu einem Interferenzbild vereinigt werden. Dies hat den Vorteil einer deutlich lichtstärkeren Abbildung. Das Interferometer 14 weist ein Aufnahmeobjektiv 41 auf, das einen Lichtstrahl auf einen Strahlteiler 42 leitet. Hier entstehen die Teilstrahlen A und B. Der Teilstrahl A wird zu einem Kippspiegel 43 weitergeleitet und etwa im rechten Winkel abgelenkt. Der Teilstrahl B trifft zunächst auf einen mit einem Antrieb, beispielsweise einem Piezoantrieb, verschiebbar gelagerten Spiegel 44, um im spitzen Winkel reflektiert zu werden. Er trifft dann auf einen weiteren, etwa parallel zu dem Spiegel 44 angeordneten Spiegel 45, so dass der Teilstrahl B, ausgehend von dem Spiegel 45, im spitzen Winkel zu dem Teil des Teilstrahls A verläuft, der von dem Spiegel 43 ausgeht. Beide Teilstrahlen werden durch ein Abbildungsobjektiv 46 geleitet und treffen auf einen zweiachsigen Spiegel 47. Der zweiachsige, als Winkelspiegel ausgebildete Spiegel 47 läst nun beide Teilstrahlen A, B auf ein und dieselbe Stelle 48 des Bildsensors 25 fallen. Das hier durch Interferenz der Teilstrahlen A und B entstehende Muster wird von dem Bildsensor 25 erfasst und an den Computer 10 weitergeleitet. Der Computer 10 steuert außerdem den Antrieb des verschiebbaren Spiegels 44, um eine Phasenmodulation herbeizuführen, was der Aufnahme der phasenverschobenen Bilder dient.

Ein Mess-System dient insbesondere der Erfassung von Fehlstellen an Prüfobjekten. Das Messobjekt 1 wird dazu aus einer Beleuchtungseinheit E, die mehrere Laserdioden 2, 3, 4, 5, 6 enthält, gleichmäßig ausgeleuchtet. Die Strahlkegel der einzelnen Laser überlappen sich stark, was eine homogene Beleuchtung auch bei großen Aufnahmewinkeln und sich ändernden Abbildungsverhältnissen durch unterschiedliche Objektgrößen und Abstände erbringt. Das Messobjekt 1 wird interferometrisch beobachtet. Aus einzelnen Bildern werden Phasendifferenzbilder ermittelt. Diese werden $2\pi/n$-moduliert, wodurch insbesondere im Bereich von Fehlstellen Phasensprünge entstehen, die besonders gute Kontraste ergeben.

## Patentansprüche

1.  Vorrichtung zur Ermittlung von Verformungen an der Oberfläche eines zu prüfenden Objekts, insbesondere an einer diffus streuenden Oberfläche, mit
    einer Beleuchtungseinheit (E); die eine Gruppe von Laserdioden (2, 3, 4, 5, 6) aufweist, die jeweils einen Lichtkegel (2a, 3a, 4a, 5a, 6a) erzeugen;
    einem Messkopf (8), der ein Interferometer (14) aufweist, wobei das Interferometer (14) aus dem von der Oberfläche des zu prüfenden Objekts rückgestreuten Licht ein Interferenzbild erzeugt;
    einem elektronischen Bildsensor (25), der in dem Strahlengang des Interferometers (14) so angeordnet ist, dass das Interferenzbild von dem Bildsensor (25) erfasst wird;

wobei die Laserdioden (2, 3, 4, 5, 6) so angeordnet sind, dass die Lichtkegel (2a, 3a, 4a, 5a, 6a) ineinander fließen und sich auf der Oberfläche des zu prüfenden Objekts mehrfach überlappen und auf dem zu prüfenden Objekt gleichzeitig einen gemeinsamen Leuchtfleck (7) mit einer gleichmäßigen Helligkeitsverteilung erzeugen, der wenigstens einen Bereich aufweist, der von dem Licht von mehr als zwei Laserdioden (2, 3, 4, 5, 6) beleuchtet wird.

2. Vorrichtung nach Anspruch 1, **dadurch gekennzeichnet, dass** der Leuchtfleck (7) mehrere Bereiche aufweist, die von dem Licht von mehr als zwei Laserdioden (2, 3, 4, 5, 6) beleuchtet werden.

3. Vorrichtung nach Anspruch 1, **dadurch gekennzeichnet, dass** die Laserdioden (2, 3, 4, 5, 6) der Gruppe im Dauerbetrieb leuchten.

4. Vorrichtung nach Anspruch 1, **dadurch gekennzeichnet, dass** die Laserdioden (2, 3, 4, 5, 6) der Gruppe pulsierend betrieben werden.

5. Vorrichtung nach Anspruch 1, **dadurch gekennzeichnet, dass** jeder Punkt des Leuchtflecks (7) in dem von dem Bildsensor (25) erfassten Bereich des Leuchtflecks (7) von wenigstens zwei Laserdioden (2, 3, 4, 5, 6) beleuchtet wird.

6. Vorrichtung nach Anspruch 1, **dadurch gekennzeichnet, dass** der Bildsensor (25) an eine Bildauswerteeinrichtung (9) angeschlossen ist, die anhand mehrerer aufgenommener Interferenzbilder eine Verformung der Objektoberfläche bestimmt.

7. Vorrichtung nach Anspruch 1, **dadurch gekennzeichnet, dass** das Interferometer (14) eine Einrichtung (20, 21) zur Phasenverschiebung zweier Teilstrahlen gegeneinander aufweist.

8. Vorrichtung nach Anspruch 6, **dadurch gekennzeichnet, dass** die Bildauswerteeinrichtung (9) eine Recheneinheit (10) aufweist, die dazu eingerichtet ist, aus mehreren von dem Objekt in unterschiedlicher Phasenlage aufgenommenen Bildern ein Phasenbild zu berechnen.

9. Vorrichtung nach Anspruch 8, **dadurch gekennzeichnet, dass** die Recheneinheit (10) dazu eingerichtet ist, aus wenigstens zwei unterschiedlichen, vorzugsweise in unterschiedlichen Objektzuständen gewonnenen Phasen bildern ein Phasendifferenzbild $\Delta\varphi(x,y)$ zu bestimmen, indem der einem ersten Objektzustand zugeordnete Phasenwinkel $\varphi_1(x,y)$ eines Bildpunktes (x,y) von dem einem zweiten Objektzustand zugeordneten Phasenwinkel $\varphi_2(x,y)$ des gleichen Bildpunktes (x,y) subtrahiert wird.

10. Vorrichtung nach Anspruch 9, **dadurch gekennzeichnet, dass** die Recheneinheit (10) die Phasendifferenzwerte $\Delta\varphi(x,y)$ punktweise modulo $2\pi/n$ dividiert und das Ergebnis mit einem Faktor n multipliziert sowie den erhaltenen Wert bereithält.

11. Vorrichtung nach Anspruch 10, **dadurch gekennzeichnet, dass** n eine ganze Zahl ist, die gleich oder größer 1 ist.

12. Vorrichtung nach einem der Ansprüche 9 bis 11, **dadurch gekennzeichnet, dass** die Recheneinheit (10) die Phasendifferenzwerte $\Delta\varphi(x,y)$ oder die $2\pi/n$-modulierten Werte bildpunktweise als Argument in eine Sinusfunktion einsetzt und den erhaltenen Wert bereithält.

13. Vorrichtung nach einem der Ansprüche 8 bis 12, **dadurch gekennzeichnet, dass** die Recheneinheit (10) mit einer Anzeigeeinrichtung (11) verbunden ist und der bereitgehaltene Wert durch die Anzeigeeinrichtung (11) dargestellt wird.

14. Vorrichtung nach Anspruch 1, **dadurch gekennzeichnet, dass** das Interferometer (14) nach Art eines Michelson-Interferometers aufgebaut ist.

15. Vorrichtung nach Anspruch 1, **dadurch gekennzeichnet, dass** das Interferometer (14) einen Strahlteiler (18) aufweist, der das von der Objektoberfläche kommende Licht in zwei Teilstrahlen aufteilt, die bis zu dem Bildsensor (25) unterschiedliche Wege durchlaufen und sich auf dem Bildsensor (25) zur Erzeugung eines Interferenzmusters treffen.

16. Verfahren zur Ermittlung von Verformungen an der Oberfläche eines zu prüfenden Objekts, insbesondere an einer diffus streuenden Oberfläche, mittels interferometrischer Oberflächenbeobachtung oder Abbildung, aufweisend folgende Verfahrensschritte:

a) die Oberfläche des zu prüfenden Objekts wird mit einer Gruppe von Laserdioden (2, 3, 4, 5, 6), die jeweils einen Lichtkegel (2a, 3a, 4a, 5a, 6a) erzeugen, beleuchtet;

b) das Licht der Laserdioden (2, 3, 4, 5, 6) wird auf einen gemeinsamen Leuchtfleck (7) auf dem zu prüfenden Objekt geleitet, wobei die Laserdioden (2, 3, 4, 5, 6) so angeordnet werden, dass die Lichtkegel (2a, 3a, 4a, 5a, 6a) ineinander fließen und sich auf der Oberfläche des zu prüfenden Objekts mehrfach überlappen und einen weitgehend gleichmäßig ausgeleuchteten Leuchtfleck (7) erzeugen, der wenigstens einen Bereich aufweist, der von dem Licht von mehr als zwei Laserdioden (2, 3, 4, 5, 6) beleuchtet wird.

c) aus dem von der Oberfläche des zu prüfenden Objekts rückgestreuten Licht wird ein Interferenzbild durch Überlagerung der entstehenden Einzelinterferogramme erzeugt.

**17.** Verfahren nach Anspruch 16, **dadurch gekennzeichnet, dass** der Leuchtfleck (7) mehrere Bereiche aufweist, die von dem Licht von mehr als zwei Laserdioden (2, 3, 4, 5, 6) beleuchtet werden.

**18.** Verfahren nach Anspruch 16, **dadurch gekennzeichnet, dass** die Laserdioden (2, 3, 4, 5, 6) der Gruppe gleichzeitig, vorzugsweise im Dauerbetrieb leuchten.

**19.** Verfahren nach Anspruch 16, **dadurch gekennzeichnet, dass** die Laserdioden (2, 3, 4, 5, 6) der Gruppe pulsierend betrieben werden.

**20.** Verfahren nach Anspruch 16, **dadurch gekennzeichnet, dass**
aus mehreren gegeneinander phasenverschoben aufgenommenen Bildern der Objektoberfläche in ein und demselben Zustand Phasenbilder gewonnen werden und
wenigstens aus zwei unterschiedlichen, vorzugsweise in unterschiedlichen Objektzuständen gewonnenen Phasenbildern ein Phasendifferenzbild $\Delta\varphi(x,y)$ bestimmt wird, indem der einem ersten Objektzustand zugeordnete Phasenwinkel $\varphi_1(x,y)$ eines Bildpunktes (x,y) von dem einem zweiten Objektzustand zugeordneten Phasenwinkel $\varphi_2(x,y)$ des gleichen Bildpunktes (x,y) subtrahiert wird.

**21.** Verfahren nach Anspruch 20, **dadurch gekennzeichnet, dass**
die Phasendifferenzwerte $\Delta\varphi(x,y)$ punktweise durch $2\pi/n$ (neN, n≥1) dividiert werden;
der verbleibende Rest mit einem Faktor n multipliziert wird und der erhaltene Wert als $2\text{-}\pi/n$-modulierter Wert bereitgestellt wird.

**22.** Verfahren nach Anspruch 20, **dadurch gekennzeichnet, dass** aus phasenversetzt aufgenommenen Intensitätsbildern unmittelbar ein $2\text{-}\pi/n$-moduliertes Phasendifferenzbild gewonnen wird.

**23.** Verfahren nach einem der Ansprüche 20 bis 22, **dadurch gekennzeichnet, dass** die Phasendifferenzwerte $\Delta\varphi(x,y)$ oder die $2\pi/n$-modulierten Werte bildpunktweise als Argument in eine Sinusfunktion eingesetzt werden und der erhaltene Wert bereitgestellt wird.

**24.** Verfahren nach einem der Ansprüche 21 bis 23, **dadurch gekennzeichnet, dass** der bereitgehaltene Wert durch eine Anzeigeeinrichtung (11) dargestellt wird.

## Claims

**1.** Device for determining deformations on the surface of an object to be tested, in particular a diffusely scattering object surface, with
an illuminating unit (E), which has an array of laser diodes (2, 3, 4, 5, 6) which respectively generate a light cone (2a, 3a, 4a, 5a, 6a);
a measuring head (8) which has an interferometer (14), wherein the interferometer (14) generates an interference image from the light reflected by the surface of the object to be tested;
an electronic image sensor (25), which is arranged in the optical path of the interferometer (14), so that the interference image is captured by the image sensor (25), and,
wherein the laser diodes (2, 3, 4, 5, 6) are arranged such that the light cones (2a, 3a, 4a, 5a, 6a) fade into one another and overlap multiply on the surface of the object to be tested and generate a joint illuminating spot (7) with a uniform brightness distribution, which has at least a region that is illuminated by the light of at least two laser diodes (2, 3, 4, 5, 6).

2. Device according to Claim 1, **characterised in that** the illuminating spot (7) has several regions, which are illuminated by the light from more than two laser diodes.

3. Device according to Claim 1, **characterised in that** the laser diodes (2, 3, 4, 5, 6) of the array illuminate in continuous operation.

4. Device according to Claim 1, **characterised in that** the laser diodes (2, 3, 4, 5, 6) of the array are operated in a pulsating manner.

5. Device according to Claim 1, **characterised in that** every point of the illuminating spot (7) is illuminated by at least two laser diodes (2, 3, 4, 5, 6), in the region of the illuminating spot (7) detected by the image sensor (25).

6. Device according to Claim 1, **characterised in that** the image sensor (25) is connected to an image evaluation means (9), which determines a deformation of the object surface on the basis of several recorded interference images.

7. Device according to Claim 1, **characterised in that** the interferometer (14) has a means (20, 21) for phase shifting two component beams relative to one another.

8. Device according to Claim 6, **characterised in that** the image evaluation means (9) has a calculation unit (10), which is configured to calculate a phase pattern form several images taken of the object in different phase positions.

9. Device according to Claim 8, **characterised in that** the calculation unit (10) is configured to determine a phase difference pattern $\Delta\varphi(x, y)$ from at least two different phase patterns, preferably obtained in different object states, by subtracting the phase angle $\varphi_1(x, y)$ of an image point (x, y) assigned to a first object state from the phase angle $\varphi_2(x, y)$ of the same image point (x, y) assigned to a second object state.

10. Device according to Claim 9, **characterised in that** the calculation unit (10) divides the phase difference values point by point modulo $2\pi/n$ and multiplies the result by a factor n and also supplies the value obtained.

11. Device according to Claim 10, **characterised in that** n is a whole number, which is greater than or equal to 1.

12. Device according to one of the Claims 9 to 11, **characterised in that** the calculation unit (10) puts the phase differences $\Delta\varphi(x, y)$ or the $2\pi/n$-modulated values pixel by pixel as argument into a sine function and supplies the value obtained.

13. Device according to one of the Claims 8 to 12, **characterised in that** the calculation unit (10) is connected to a display means (11) and that the supplied value is displayed by the display means (11).

14. Device according to claim 1, **characterised in that** the interferometer (14) is structured in the manner of a Michelson interferometer.

15. Device according to Claim 1, **characterised in that** the interferometer (14) has a beam splitter (18), which divides the light coming from the object surface into two component beams, which run through different paths up to the image sensor (25) and meet on the image sensor (25) for generation of an interference pattern.

16. Procedure for determining deformations on the surface of an object to be tested, in particular a diffusely scattering object surface, by means of interferometric surface observation or imaging, which has the following steps:

a) the surface of the object to be tested is illuminated by an array of laser diodes (2, 3, 4, 5, 6) which respectively generate a light cone (2a, 3a, 4a, 5a, 6a);
b) the light of the laser diodes (2, 3, 4, 5, 6) is directed to a joint illuminating spot (7) on the object to be tested, wherein the laser diodes (2, 3, 4, 5, 6) are arranged in such a way that the light cones (2a, 3a, 4a, 5a, 6a) merge into each other and overlap multiply on the surface of the object to be tested and generate a joint illuminating spot (7) with a uniform brightness distribution, which has at least a region that is illuminated by the light of at least two laser diodes (2, 3, 4, 5, 6).
c) an interference image is generated from the light reflected by the surface of the object to be tested by superposing the individual interferograms obtained.

17. Procedure according to Claim 16, **characterised in that** the illuminating spot (7) has several regions, which are illuminated by the light from more than two laser diodes.

18. Procedure according to Claim 16, **characterised in that** the laser diodes (2, 3, 4, 5, 6) of the array illuminate simultaneously, preferably in continuous operation.

19. Procedure according to claim 16, **characterised in that** the laser diodes (2, 3, 4, 5, 6) of the array are operated in a pulsating manner.

20. Procedure according to Claim 16, **characterised in that**

phase patterns $\varphi(x, y)$ are obtained from several mutually phase-shifted recorded images of the object surface in one and the same state, and
a phase difference pattern $\Delta\varphi(x, y)$ is determined at least from two different phase patterns $\varphi_1(x, y)$, $\varphi_2(x, y)$), preferably obtained in different object states, by subtracting the phase angle $\Delta\varphi_1(x, y)$ of an image point (x, y) assigned to a first object state from the phase angle $\Delta\varphi_2(x, y)$ of the same image point (x, y) assigned to a second object state.

21. Procedure according to Claim 20, **characterised in that**
the phase difference values are divided point by point by $2\pi(n\varepsilon N, n\geq 1)$;
the remainder multiplied by a factor n, and
that the value obtained is supplied as a 2-$\pi$/n-mudulated value.

22. Procedure according to claim 20, **characterised in that** a $2\pi$/n-mudulated phase difference pattern is obtained from phase-shifted recorded intensity images.

23. Procedure according to one of the Claims 20 to 22, **characterised in that** the phase differences $\Delta\varphi(x, y)$ or the 2-$\pi$/n-modulated values are put pixel by pixel as an argument into a sine function and the value obtained is supplied.

24. Procedure according to one of the Claims 21 to 23, **characterised in that** the supplied value is displayed by a display means (11).

**Revendications**

1. Dispositif pour déterminer des déformations de la surface d'un objet à tester, en particulier d'une surface émettant un rayonnement diffus, comprenant
Une unité d'éclairage (E) comportant un groupe de diodes laser (2, 3, 4, 5, 6) qui chacune produit un cône lumineux (2a, 3a, 4a, 5a, 6a);
Une tête de mesure (8) comportant un interféromètre (14), l'interféromètre (14) générant une image d'interférence a partir de la lumière reflétée par la surface de l'objet à tester;
Un capteur d'image électronique (25) monté sur le parcours des rayons de l'interféromètre (14) de sorte que l'image d'interférence est saisie par le capteur d'image (25);
les diodes laser (2, 3, 4, 5, 6) étant arrangées de telle manière, que les cônes lumineux (2a, 3a, 4a, 5a) s'écoulent l'un dans l'autre et se chevauchent à plusieurs reprises sur la surface de l'objet à tester et produisent simultanément une tache lumineuse (7) commune avec une répartition régulière de la luminosité sur la surface de l'objet à tester, et qui présente au moins une zone qui est illuminée d'au moins deux diodes laser (2, 3, 4, 5, 6).

2. Dispositif selon la revendication 1, **caractérisé en ce que** la tache lumineuse (7) présente plusieurs zones, qui sont éclairées par la lumière émise par plus de deux diodes laser.

3. Dispositif selon la revendication 1, **caractérisé en ce que** les diodes laser (2, 3, 4, 5, 6) éclairent en continu.

4. Dispositif selon la revendication 1, **caractérisé en ce que** les diodes laser (2, 3, 4, 5, 6) fonctionnent de manière pulsatoire.

**5.** Dispositif selon la revendication 1, **caractérisé en ce que** chaque point de la tache lumineuse (7) qui se trouve dans la zone de ladite tache (7) saisie par le capteur d'image (25) est éclairé par au moins deux diodes laser (2, 3, 4, 5, 6).

**6.** Dispositif selon la revendication 1, **caractérisé en ce que** le capteur d'image (25) est relié à un dispositif de traitement d'images (9) qui détermine, à partir de plusieurs images d'interférence prises, une déformation de la surface de l'objet.

**7.** Dispositif selon la revendication 1, **caractérisé en ce que** l'interféromètre (14) présente un dispositif (20, 21) pour produire le déphasage relatif de deux rayonnements partiels.

**8.** Dispositif selon la revendication 6, **caractérisé en ce que** le dispositif de traitement d'images (9) comprend une unité de calcul (10) conçue pour calculer une image de phase à partir de plusieurs images de l'objet prises dans diverses positions de phase.

**9.** Dispositif selon la revendication 8, **caractérisé en ce que** l'unité de calcul (10) es conçue pour, à partir d'au moins deux images de phase différentes prises de préférence dans des états différents de l'objet, déterminer une image différentielle de phase $\Delta\varphi(x, y)$, l'angle de phase $\varphi_1(x, y)$ d'un point d'image (x, y) associé à un premier état de l'objet étant soustrait d'un second angle de phase $\varphi_2(x, y)$ du même point d'image (x, y) associé à un second état de l'objet.

**10.** Dispositif selon la revendication 9, **caractérisé en ce que** l'unité de calcul (10) divise point par point les valeurs de différences de phase par un modulo $2\pi/n$, multiplie le résultat par un facteur n et met à disposition la valeur obtenue.

**11.** Dispositif selon la revendication 10, **caractérisé en ce que** n est un nombre entier supérieur ou égal à 1.

**12.** Dispositif selon l'une des revendications 9 à 11, **caractérisé en ce que** l'unité de calcul (10) introduit point d'image par point d'image, en tant qu'argument dans une fonction sinus, les différences de phase $\Delta\varphi(x, y)$ ou les valeurs modulées par $2$-$\pi/n$ et met à disposition la valeur obtenue.

**13.** Dispositif selon l'une des revendications 8 à 12, **caractérisé en ce que** l'unité de calcul (10) est reliée à un dispositif d'affichage (11) et que la valeur mise à disposition est représentée par le dispositif d'affichage (11).

**14.** Dispositif selon la revendication 1, **caractérisé en ce que** l'interféromètre (14) est du type Michelson.

**15.** Dispositif selon la revendication 1, **caractérisé en ce que** l'interféromètre (14) comprend un diviseur de rayonnement (18) qui divise la lumière venant de la surface de l'objet en deux rayonnements partiels que suivent des parcours différents pour venir frapper le capteur d'images (25) afin de produire une figure d'interférence.

**16.** Procédé pour déterminer des déformations de la surface d'un objet à tester, en particulier d'une surface émettant un rayonnement diffus, par les moyens d'une observation ou d'une image interférométrique de cette surface, comprenant les étapes de procédé suivantes:

a) La surface de l'objet à tester est illuminé par des diodes laser (2, 3, 4, 5, 6) qui chacune produit un cône lumineux (2a, 3a, 4a, 5a, 6a);
b) La lumière des diodes laser (2, 3, 4 , 5, 6) est guidée sur une tache lumineuse (7) commune sur l'objet à tester, les diodes laser (2, 3, 4, 5, 6) étant arrangées de telle manière, que les cônes lumineux (2a, 3a, 4a, 5a) s'écoulent l'un dans l'autre et se chevauchent à plusieurs reprises sur la surface de l'objet à tester pour produire simultanément une tache lumineuse (7) commune avec une répartition régulière de la luminosité sur la surface de l'objet à tester, et qui présente au moins une zone qui est illuminée d'au moins deux diodes laser (2, 3, 4, 5, 6).
c) une image d'interférence est générée par superposition des interférogrammes simples résultants, à partir de la lumière reflétée par la surface de l'objet à tester.

**17.** Procédé selon la revendication 16, **caractérisé en ce que** la tache lumineuse (7) présente plusieurs zones, qui sont éclairées par la lumière émise par plus de deux diodes laser.

**18.** Procédé selon la revendication 16, **caractérisé en ce que** les diodes laser (2, 3, 4, 5, 6) du groupe éclairent en même temps, et de préférence en continu.

**19.** Procédé selon la revendication 16, **caractérisé en ce que** les diodes laser (2, 3, 4, 5, 6) du groupe fonctionnent

# EP 1 014 036 B2

de manière pulsatoire.

**20.** Procédé selon la revendication 16, **caractérisé en ce que**
à partir de plusieurs images prises avec déphasage entre elles de la surface de l'objet dans un seul et même état, on obtient des images de phase $\varphi(x, y)$ et
à partir d'au moins deux images de phase ($\varphi_1(x, y)$, ($\varphi_2(x, y)$)) différentes prises de préférence dans des états différents de l'objet, on définit une image différentielle de phase $\Delta\varphi(x, y)$, l'angle de phase $\Delta\varphi_1(x, y)$ d'un point d'image (x, y), associé à un premier état de l'objet, étant soustrait de l'angle de phase $\Delta\varphi_2(x, y)$ du même point d'image (x, y) associé à un second état de l'objet.

**21.** Procédé selon la revendication 20, **caractérisé en ce que**
les valeurs de différences de phase sont divisées point par point par $2\pi/n$, (n $\varepsilon$ N, n $\geq$ 1)
le reste est multiplié par un facteur n, et
le résultat est mis à disposition en tant que valeur modulée par 2n/n.

**22.** Procédé selon la revendication 20, **caractérisé en ce qu'**à partir d'images d'intensité prises avec déphasage, on tire directement une image à différentielle de phase modulée par $2\pi/n$.

**23.** Procédé selon l'une des revendications 20 à 22, **caractérisé en ce que** les différences de phase $\Delta\varphi(x, y)$ ou les valeurs modulées par $2\pi/n$ sont introduites pour chaque point d'image en tant qu'argument dans une fonction sinus, et la valeur obtenue est mise à disposition.

**24.** Procédé selon l'une des revendications 21 à 23, **caractérisé en ce que** la valeur mise à disposition est représentée par un dispositif d'affichage (11).

12

Fig.1

13

Fig. 2

Fig. 3

Fig. 4

Fig.5

Fig. 6

Fig. 7

Fig. 8

Fig. 9

EP 1 014 036 B2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4231578 C2
- DE 19625830 A